# EUROPÄISCHE PATENTSCHRIFT

(11) **EP 2 200 855 B1**
(45) Veröffentlichungstag und Bekanntmachung des Hinweises auf die Patenterteilung: **21.08.2013**
(21) Anmeldenummer: 08841742.3
(22) Anmeldetag: 16.10.2008
(51) Int. Cl.: B60K 35/00, B60K 37/06

(54) **VERFAHREN ZUR ANZEIGE VON INFORMATION**
METHOD FOR DISPLAYING INFORMATION
PROCEDE POUR AFFICHER DES INFORMATIONS

(30) Priorität: 25.10.2007 DE 102007051010
(43) Veröffentlichungstag der Anmeldung: 30.06.2010
(73) Patentinhaber: Bayerische Motoren Werke Aktiengesellschaft, 80809 München (DE)
(72) Erfinder: DISTLER, Armin, 81377 München (DE); KUENZNER, Hermann, 85356 Freising (DE)
(74) Vertreter: Kammermeier, Peter Frank
(86) Internationale Anmeldenummer: PCT/EP2008/008748
(87) Internationale Veröffentlichungsnummer: WO 2009/052989

(56) Entgegenhaltungen:
- EP-A- 1 083 078
- DE-A1-102004 058 954

## Beschreibung

Die Erfindung betrifft ein Verfahren zur Anzeige von Information betreffend die Funktionsbelegungen einer Gruppe frei belegbarer Bedientasten in einem Kraftfahrzeug, bei dem in einer ersten Anzeigestufe zu jeder Bedientaste der Gruppe eine Kurzbeschreibung der jeweiligen Funktionsbelegung ausgegeben wird und bei dem in einer zweiten Anzeigestufe zu einer einzigen ausgewählten Bedientaste der Gruppe eine erweiterte Beschreibung ausgegeben wird.

Ein solches Verfahren ist beispielsweise bekannt aus der DE 10 2004 058 954 A1.

Aus energetischen und wirtschaftlichen Gründen sowie aus Design-Gründen werden in Kraftfahrzeugen typischerweise nur verhältnismäßig kleine Displays verbaut. Der effizienten Nutzung der verfügbaren Anzeigefläche kommt daher besondere Bedeutung zu.

Es ist eine Aufgabe der Erfindung, die Nutzung der verfügbaren Anzeigefläche bei einem gattungsgemäßen Verfahren zu verbessern.

Gelöst wird diese Aufgabe durch ein Verfahren mit den Merkmalen des Anspruchs 1. Vorteilhafte Ausführungsformen und Weiterbildungen der Erfindung ergeben sich aus den abhängigen Ansprüchen.

Die Erfindung ermöglicht die Darstellung der erweiterten Beschreibung zumindest teilweise in Bildschirmbereichen, die bereits zuvor mit Kurzbeschreibungen belegt war und die aufgrund ihrer Randlage ohnehin nur selten im Fokus der Aufmerksamkeit des Nutzers steht. Die Kurzbeschreibung der ausgewählten Bedientaste ist durch die Langbeschreibung obsolet geworden. Ihr Bildschirmbereich kann daher zumindest teilweise zu Gunsten der Langbeschreibung freigegeben werden. Auch ist die Kurzbeschreibung anderer Bedientasten in aller Regel als obsolet oder zumindest weniger relevant anzusehen, wenn der Bediener bereits die zweite Anzeigestufe für die ausgewählte Bedientaste erreicht hat. Daher können auch die Bildschirmbereiche der Kurzbeschreibungen anderer Bedientasten zumindest teilweise zu Gunsten der Langbeschreibung der ausgewählten Bedientaste freigegeben werden.

Vorzugsweise nimmt in der zweiten Anzeigestufe die erweiterte Beschreibung ausschließlich Anzeigefläche ein, die in der ersten Anzeigestufe für Kurzbeschreibungen genutzt wurde. Es wird somit keine zusätzliche Anzeigefläche beansprucht.

Vorzugsweise nimmt in der zweiten Anzeigestufe die erweiterte Beschreibung sogar die gesamte Anzeigefläche ein, die in der ersten Anzeigestufe für Kurzbeschreibungen genutzt wurde. Diese Anzeigefläche wird somit besonders gut ausgenutzt.

Vorzugsweise nimmt in der zweiten Anzeigestufe die erweiterte Beschreibung exakt die Anzeigefläche ein, die in der ersten Anzeigestufe für die Gesamtheit der Kurzbeschreibungen genutzt wurde.

Gemäß einer ersten bevorzugten Ausführungsform der Erfindung haben die Bildschirmbereiche der Kurzbeschreibungen in der ersten Anzeigestufe im Wesentlichen dieselbe Höhe und sind derart in gleicher Höhe nebeneinander auf der Anzeigefläche angeordnet, dass sie im Wesentlichen eine Zeile bilden. In der zweiten Anzeigestufe nimmt die erweiterte Beschreibung einen gegenüber der Kurzbeschreibung der ausgewählten Bedientaste gesteigerten Teil dieser Zeile ein oder sie nimmt sogar die gesamte Zeile ein. Die Zeile befindet sich vorzugsweise am oberen oder unteren Rand der Anzeigeeinheit.

Gemäß einer zweiten bevorzugten Ausführungsform der Erfindung haben die Bildschirmbereiche der Kurzbeschreibungen in der ersten Anzeigestufe im Wesentlichen dieselbe Breite und sind horizontal aneinander ausgerichtet derart übereinander angeordnet, dass sie im Wesentlichen eine Spalte bilden. In der zweiten Anzeigestufe nimmt die erweiterte Beschreibung einen gegenüber der Kurzbeschreibung der ausgewählten Bedientaste gesteigerten Teil dieser Spalte ein oder sie nimmt sogar die gesamte Spalte ein. Die Spalte befindet sich vorzugsweise am linken oder rechten Rand der Anzeigeeinheit.

Vorzugsweise wird in der zweiten Anzeigestufe die Kurzbeschreibung zumindest einer nicht ausgewählten Bedientaste gegenüber der ersten Anzeigestufe verkleinert zu Gunsten der erweiterten Beschreibung der ausgewählten Bedientaste.

Vorzugsweise wird zudem in der zweiten Anzeigestufe die Kurzbeschreibung zumindest einer nicht ausgewählten Bedientaste gegenüber der ersten Anzeigestufe innerhalb der bereits in der ersten Anzeigestufe für Kurzbeschreibungen genutzten Anzeigefläche verschoben. Durch die Kombination aus Verkleinerung und Verschiebung können die Kurzbeschreibungen der anderen Bedientasten gewissermaßen zu Gunsten der in der zweiten Anzeigestufe expandierenden Beschreibung der ausgewählten Taste ausweichen. Dennoch kann eine räumliche Korrespondenz der räumlichen Anordnung der Bedientasten und der zugehörigen Kurzbeschreibungen bzw. der erweiterten Beschreibung beibehalten werden.

Alternativ kann in der zweiten Anzeigestufe die Kurzbeschreibung zumindest einer nicht ausgewählten Bedientaste zumindest teilweise verdeckt werden von der erweiterten Beschreibung der ausgewählten Bedientaste.

Im Folgenden werden anhand der beigefügten Zeichnungen bevorzugte Ausführungsbeispiele der Erfindung beschrieben. Daraus ergeben sich weitere Details, bevorzugte Ausführungsformen und Weiterbildungen der Erfindung. Im Einzelnen zeigen
- Fig. 1: eine korrespondierende Anordnung von horizontal verteilten Bedientasten und den zugehörigen Tastenbeschreibungen auf einer Anzeigeeinheit eines Kraftfahrzeugs,
- Fig. 2: eine korrespondierende Anordnung von vertikal verteilten Bedientasten und den zugehörigen Tastenbeschreibungen auf einer Anzeigeeinheit eines Kraftfahrzeugs,
- Fig. 3: eine Hervorhebung der Tastenbeschreibung einer einzelnen Bedientaste bei der Vorrichtung gemäß Fig. 1,
- Fig. 4: eine Langbeschreibung einer einzelnen Bedientaste bei der Vorrichtung gemäß Fig. 1,
- Fig. 5: eine andere Ausführungsform einer Langbeschreibung bei einer Vorrichtung mit horizontaler Bedientasten-Verteilung,
- Fig. 6: eine weitere Ausführungsform einer Langbeschreibung bei einer Vorrichtung mit horizontaler Bedientasten-Verteilung,
- Fig. 7: eine Hervorhebung der Tastenbeschreibung einer einzelnen Bedientaste bei der Vorrichtung gemäß Fig. 2,
- Fig. 8: eine Langbeschreibung einer einzelnen Bedientaste bei der Vorrichtung gemäß Fig. 2,
- Fig. 9: eine andere Ausführungsform einer Langbeschreibung bei einer Vorrichtung mit vertikaler Bedientasten-Verteilung.

Zur Bedienung von Menüsystemen in Kraftfahrzeugen werden häufig variabel belegbare Bedientasten, auch bezeichnet als Softkeys oder Favoriten-Tasten, verwendet. Die jeweilige Funktion der Bedientasten im aktuellen Belegungszustand kann dabei meist über ein Display, beispielsweise einen im Fahrzeuginnenraum angeordneten Bildschirm, dargestellt werden. Typischerweise werden dazu kleine Felder mit Tastenbeschreibungen auf dem Display dargestellt. Die Darstellung dieser Felder kann grundsätzlich dauerhaft oder temporär erfolgen.

Vorteilhafterweise korrespondiert in einem Zustand, in welchem die Tastenbeschreibungs-Felder auf dem Display angezeigt werden, die räumliche Anordnung der Bedientasten mit der räumlichen Anordnung der Tastenbeschreibungs-Felder. Beispielsweise sind bei manchen Systemen die Bedientasten in unmittelbarer Nähe des Displays angeordnet und die zur jeweiligen Bedientaste gehörige Tastenbeschreibung befindet sich unmittelbar neben, über oder unter der Bedientaste auf dem Display.

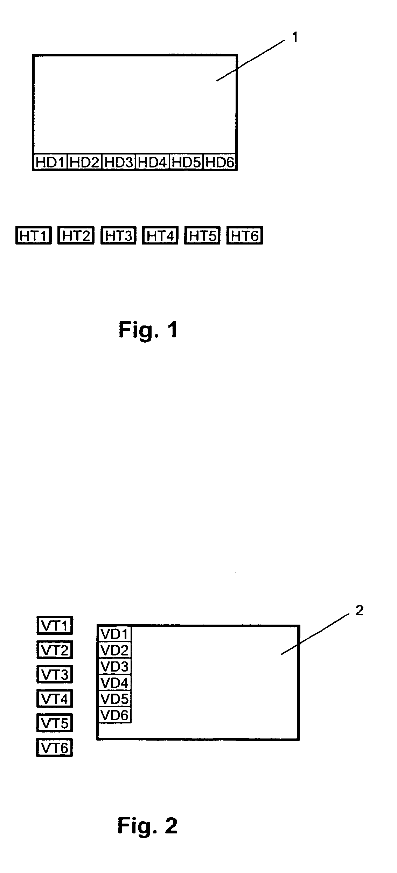

Fig. 1 zeigt eine derart korrespondierende räumliche Anordnung von räumlich horizontal verteilten Bedientasten HT1, HT2, HT3, HT4, HT5, HT6 und den zugehörigen Tastenbeschreibungen HD1, HD2, HD3, HD4, HD5, HD6 auf einem Display 1 eines Kraftfahrzeugs.

Fig. 2 zeigt eine derart korrespondierende räumliche Anordnung von räumlich vertikal verteilten Bedientasten VT1, VT2, VT3, VT4, VT5, VT6 und den zugehörigen Tastenbeschreibungen VD1, VD2, VD3, VD4, VD5, VD6 auf einem Display 1 eines Kraftfahrzeugs.

Die Beschriftung bzw. eine andere Form der Beschreibung der Bedientasten erfolgt also räumlich korrespondierend zu ihrer räumlichen Anordnung. Sind die Bedientasten nebeneinander liegend angeordnet, werden auch die Kurzbeschreibungen nebeneinander angeordnet. Sind die Bedientasten übereinander angeordnet, erfolgt auch die Anordnung der Kurzbeschreibungen übereinander. Entsprechendes gilt für andere denkbare Tastenanordnungen (z.B. kreisförmig, halbkreisförmig oder schräg).

Aus energetischen und wirtschaftlichen Gründen sowie aus Design-Gründen werden in Kraftfahrzeugen typischerweise nur verhältnismäßig kleine Displays verbaut. Die räumlichen Einschränkungen auf einem solchen Display erlauben bei einer Anordnung gemäß Fig. 1 oder Fig. 2 nur eine relativ kurze textuelle Beschreibung jeder Tastenfunktion. Oft werden auch nur Symbole zur Beschreibung der Tastenfunktionen verwendet.

Zudem fällt, wenn die Bedientasten in größerer Entfernung zum Display angeordnet sind, gerade einem ungeübten Bediener eine Zuordnung zwischen den Bedientasten und der auf dem Display erscheinenden Tastenbeschreibung derselben zunehmend schwer.

Vorzugsweise erfolgt die Beschreibung der Tastenfunktion mehrstufig in Folge von Anforderungshandlungen eines Bedieners. Die Anwahl der einzelnen Stufen der Tastenbeschreibung kann über verschiedene Methoden erfolgen.

Bei einem ersten Beispielsystem, entsprechend dem System gemäß Fig. 1, zeigt das Display 1 vor der Berührung einer der Bedientasten keines der Tastenbeschreibungs-Felder gemäß Fig. 1 an.

Eine erste Stufe der Tastenbeschreibung einer bestimmten Bedientaste kann durch ein Berühren dieser Bedientaste ausgelöst werden. Das Berühren der Bedientaste durch den Bediener stellt also eine erste Anforderungshandlung dar.

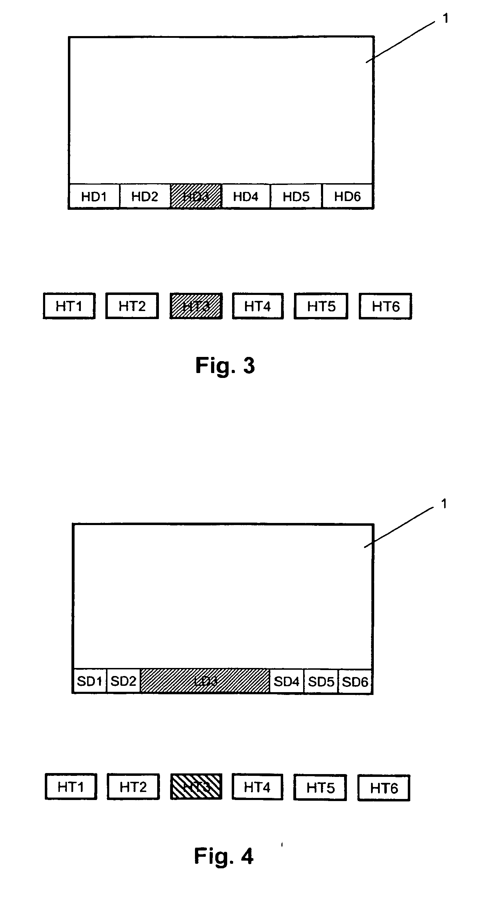

Fig. 3 zeigt das Display 1 kurz nach Beginn einer Berührung der Bedientaste HT3. Die Berührung der Bedientaste HT3 ist in Fig. 3 dargestellt durch eine Schraffur der Bedientaste HT3 von links unten nach rechts oben. Die erste Stufe der Tastenbeschreibung umfasst eine textuelle Kurzbeschreibung der Tastenfunktion in dem entsprechenden Tastenbeschreibungs-Feld HD3 auf dem Display 1. Zudem umfasst die erste Stufe eine Kennzeichnung der berührten Bedientaste. Diese Kennzeichnung wird bewirkt, indem das zu der Bedientaste gehörige Tastenbeschreibungs-Feld auf dem Display 1 optisch hervorgehoben wird, im vorliegenden Fall durch eine Einfärbung des Tastenbeschreibungs-Felds HD3. Die Einfärbung ist in Fig. 3 ebenfalls dargestellt durch eine Schraffur des Tastenbeschreibungs-Felds HD3 von links unten nach rechts oben. Die Hervorhebung des Tastenbeschreibungs-Felds HD3 wird vom Bediener, nicht zuletzt wegen der korrespondierenden Anordnung der Tastenbeschreibungs-Felder und der Bedientasten, intuitiv als Kennzeichnung der Bedientaste HT3 aufgefasst.

Gleichzeitig mit der Tastenbeschreibung der berührten Bedientaste HT3 werden in der ersten Stufe der Tastenbeschreibung auch die Tastenbeschreibungs-Felder HD1, HD2, HD4, HD5, HD6 aller anderen Bedientasten HT1, HT2, HT4, HT5, HT6 auf dem Display 1 eingeblendet. Diese anderen Tastenbeschreibungs-Felder HD1, HD2, HD4, HD5, HD6 sind jedoch nicht optisch hervorgehoben. Der Bediener sieht daher nur die von ihm berührte Bedientaste HT3 als gekennzeichnet an.

Die Kennzeichnung der berührten Bedientaste erlaubt dem Bediener eine Korrektur seiner Fingerposition, falls nicht die "richtige" bzw. gewünschte Bedientaste berührt wurde. Insbesondere bei Systemen, bei denen sich die Bedientasten in einer gewissen Entfernung zum Display befinden, wird die Bedienung dadurch wesentlich erleichtert.

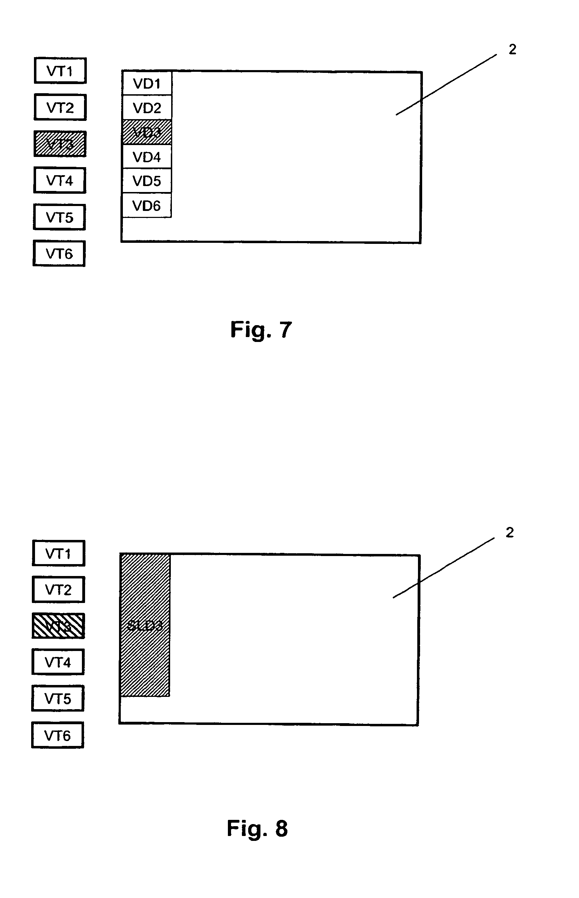

Fig. 7 zeigt eine Bildschirmansicht einer ersten Stufe der Tastenbeschreibung bei Berührung der Bedientaste VT3 für den Fall einer vertikalen räumlichen Anordnung der Bedientasten.

Eine zweite Stufe der Tastenbeschreibung wird ausgelöst, wenn die Dauer der Berührung von HT3 oder VT3 eine bestimmte Zeitschwelle (z.B. 2 Sekunden) überschreitet. Das langanhaltende Berühren der Bedientaste durch den Bediener stellt also eine zweite Anforderungshandlung dar.

Fig. 4 zeigt das Display 1 kurz nach Überschreiten der Zeitschwelle. Die langanhaltende Berührung der Bedientaste HT3 ist in Fig. 4 dargestellt durch eine Schraffur der Bedientaste HT3 von links oben nach rechts unten. Die zweite Stufe der Tastenbeschreibung umfasst eine gegenüber der vorherigen Kurzbeschreibung erweiterte Langbeschreibung der Tastenfunktion in dem nun gegenüber dem Tastenbeschreibungs-Feld HD3 vergrößerten Tastenbeschreibungs-Feld LD3. Gegebenenfalls kann die erweiterte Kurzbeschreibung auch ein Symbol umfassen, etwa eine Musiknote, wenn die Bedientaste HT3 mit einem Radiosender belegt ist. Auch das erweiterte Tastenbeschreibungs-Feld LD3 ist optisch hervorgehoben. Gleichzeitig mit der Tastenbeschreibung LD3 der berührten Bedientaste HT3 werden weiterhin auch Tastenbeschreibungs-Felder SD1, SD2, SD4, SD5, SD6 aller anderen Bedientasten HT1, HT2, HT4, HT5, HT6 auf dem Display 1 angezeigt. Diese anderen Tastenbeschreibungs-Felder SD1, SD2, SD4, SD5, SD6 sind nun jedoch gegenüber dem Zustand HD1, HD2, HD4, HD5, HD6 der ersten Stufe gemäß Fig. 3 verkleinert, um dem Tastenbeschreibungs-Feld LD3 mehr Anzeigefläche zu überlassen. Alternativ könnten bei einer anderen Implementierung die benachbarten Tastenbeschreibungs-Felder auch einfach vollständig oder teilweise von LD3 verdeckt werden.

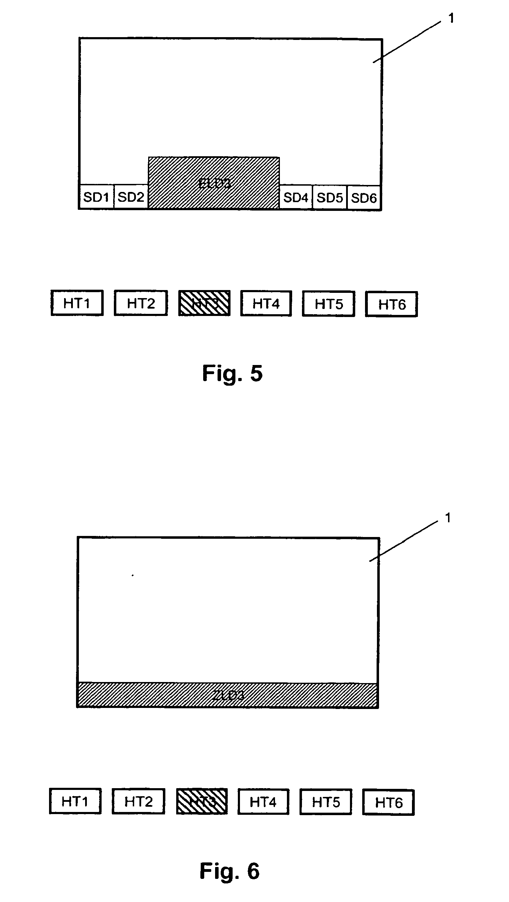

Wird die zweite Stufe ausgelöst, wird die Langbeschreibung einer Bedientaste also auf einem Teil der Displayfläche angezeigt, der zuvor (in der ersten Stufe) bereits teilweise für zumindest einen Teil der Kurzbeschreibung derselben Bedientaste genutzt wurde. Dadurch kann der Bediener den Übergang von der ersten zur zweiten Stufe leicht verfolgen, ohne den gedanklichen Bezug zwischen Bedientaste, erster Stufe und zweiter Stufe zu verlieren. Vorzugsweise wird für die Langbeschreibung der Bedientaste die gesamte Bildschirmfläche genutzt, die zuvor für die Kurzbeschreibung derselben Bedientaste genutzt wurde. Die Zuordnung ist dann besonders einfach, weil der Übergang von der Kurzbeschreibung zur Langbeschreibung sich dem Bediener dann optisch lediglich als "Vergrößerung" der Tastenbeschreibung darstellt. Ein Vergleich von Fig. 3 und Fig. 4 zeigt, dass LD3 die gesamte Displayfläche überdeckt, die zuvor für HD3 genutzt wurde. Ebenso ist dies gegeben, wenn das Display in der zweiten Stufe eine erweiterte Langbeschreibung ELD3 gemäß Fig. 5 zeigt, die noch weitere Bildschirmfläche einnimmt.

Ebenso vorteilhaft ist es, dass die Langbeschreibung der langanhaltend berührten Bedientaste auf einem Teil der Displayfläche angezeigt wird, der zuvor (in der ersten Stufe) bereits zumindest teilweise für zumindest einen Teil der Kurzbeschreibung zumindest einer anderen Bedientaste genutzt wurde. Zumindest im Umfang der bereits zuvor für die Kurzbeschreibung der zumindest einen anderen Bedientaste genutzten Displayfläche verursacht die Langbeschreibung also keinen erhöhten Bedarf an Anzeigefläche. Ein Vergleich von Fig. 3 und Fig. 4 zeigt, dass LD3 einen Teil der Displayfläche überdeckt, die zuvor für HD2 und HD4 genutzt wurde. Ebenso ist dies gegeben, wenn das Display in der zweiten Stufe eine erweiterte Langbeschreibung ELD3 gemäß Fig. 5 zeigt, die noch weitere Bildschirmfläche einnimmt.

Besonders vorteilhaft ist es, wenn die Langbeschreibung der langanhaltend berührten Bedientaste sogar ausschließlich auf einem Teil der Displayfläche angezeigt wird, der zuvor (in der ersten Stufe) bereits für Kurzbeschreibungen genutzt wurde. Es wird dann überhaupt keine weitere Displayfläche durch die Langbeschreibung beansprucht. Auch dies ist beim Übergang von Fig. 3 zu Fig. 4 gegeben. Es wird von LD3 ausschließlich Displayfläche überdeckt, die zuvor für HD2, HD3 und HD4 genutzt wurde.

Wiederum besonders vorteilhaft ist es, wenn die Langbeschreibung der langanhaltend berührten Bedientaste den Teil der Displayfläche, der zuvor (in der ersten Stufe) bereits für Kurzbeschreibungen genutzt wurde, komplett beansprucht, d.h. wenn die Langbeschreibung der langanhaltend berührten Bedientaste auf genau dem Teil der Displayfläche angezeigt wird, der zuvor (in der ersten Stufe) für die Gesamtheit der angezeigten Kurzbeschreibungen genutzt wurde. Es wird dann überhaupt keine weitere Displayfläche durch die Langbeschreibung beansprucht und es steht dennoch eine verhältnismäßig große Displayfläche für die Anzeige der Langbeschreibung zur Verfügung. Fig. 6 zeigt eine Bildschirmansicht, in der die zeilenförmige Langbeschreibung ZLD3 der langanhaltend gedrückten Bedientaste HT3 die gesamte horizontale Bildschirmzeile einnimmt, die zuvor (vgl. Fig. 3) für die Kurzbeschreibungen aller Bedientasten genutzt wurde. Fig. 8 zeigt eine Bildschirmansicht, in der die spaltenförmige Langbeschreibung SLD3 der langanhaltend gedrückten Bedientaste HT3 die gesamte vertikale Bildschirmspalte einnimmt, die zuvor (vgl. Fig. 7) für die Kurzbeschreibungen aller Bedientasten genutzt wurde.

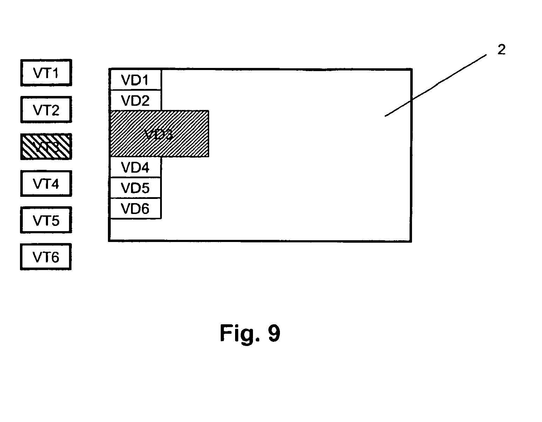

Selbstverständlich kann die Langbeschreibung sich optional auch in Bildschirmbereiche erstrecken, die zuvor nicht für eine Kurzbeschreibung genutzt wurden, vgl. Fig. 5 für den Fall der horizontalen Bedientasten-Anordnung und Fig. 9 für den Fall der vertikalen Bedientasten-Anordnung.

Das Auslösen der eigentlichen Funktion, mit der die Bedientaste HT3 belegt ist, erfolgt über ein Drücken der Bedientaste HT3.

Bei einem zweiten Beispielsystem werden die unterschiedlichen Stufen der Tastenbeschreibung einer Bedientaste ausgelöst, indem die Bedientaste mehrfach gedrückt wird.

Ein erster Tastendruck führt zur Anzeige einer Kurzbeschreibung und Kennzeichnung der gedrückten Bedientaste. Die Display-Anzeige entspricht dann beispielsweise derjenigen gemäß Fig. 3 oder Fig. 7.

Ein zweiter Tastendruck führt zur Anzeige einer ausführlicheren Langbeschreibung und Kennzeichnung der gedrückten Bedientaste. Die Display-Anzeige entspricht dann beispielsweise derjenigen gemäß Fig. 4, Fig. 5, Fig. 6, Fig. 8 oder Fig. 9.

Vorzugsweise wird der zweite Tastendruck bei diesem zweiten Beispielsystem nur dann als zweiter Tastendruck gewertet, wenn er innerhalb einer bestimmten Zeitspanne (z.B. 3 Sekunden) nach dem ersten Tastendruck erfolgt. Wird die Zeitspanne überschritten, verschwindet die Kurzbeschreibung vom Display und der erste darauf folgende Tastendruck der Bedientaste wird wieder als erster Tastendruck gewertet. Wurde zwischenzeitlich eine andere Bedientaste gedrückt, bleibt die Kurzbeschreibung der zuerst gedrückten Bedientaste zwar sichtbar, aber ein folgender Tastendruck der zuerst gedrückten Bedientaste wird dennoch wieder als erster Tastendruck gewertet, weil nun die andere Bedientaste gekennzeichnet ist.

Ein dritter Tastendruck führt zur Auslösung der Funktion, mit der die jeweilige Bedientaste belegt ist.

Vorzugsweise wird ein Tastendruck bei diesem zweiten Beispielsystem nur dann als dritter Tastendruck gewertet, wenn er innerhalb einer bestimmten Zeitspanne (z.B. 3 Sekunden) nach dem zweiten Tastendruck erfolgt. Wird die Zeitspanne überschritten oder wurde zwischenzeitlich eine andere Bedientaste gedrückt, verschwindet die Langbeschreibung vom Display und der erste darauf folgende Tastendruck der Bedientaste wird wieder als erster Tastendruck gewertet.

Das beschriebene Verfahren zur Kennzeichnung einer berührten oder anderweitig vorausgewählten Bedientaste durch Hervorhebung der zugehörigen Kurzbeschreibung ist selbstverständlich auch anwendbar und vorteilhaft bei einem einstufigen Verfahren zur Tastenbeschreibung (beispielsweise nur mit Kurzbeschreibung und ohne Langbeschreibung).

Mittels der Erfindung ist es möglich, sehr platzsparend und vollständig (oder zumindest weitgehend) ohne Überdeckung andere Display-Inhalte Information betreffend die Belegung bzw. Funktion einer Bedientaste in verschiedenen Detaillierungsgraden auszugeben. Die Bedientasten können dabei auch entfernt von einem Bildschirm angeordnet werden, da über die Kennzeichnung der selektierten Taste mittels Hervorhebung der zugehörigen Kurzbeschreibung am Bildschirm eine gute Orientierung gewährleistet ist.

## Patentansprüche

1. Verfahren zur Anzeige von Information betreffend die Funktionsbelegungen einer Gruppe frei belegbarer Bedientasten in einem Kraftfahrzeug,
bei dem in einer ersten Anzeigestufe zu jeder Bedientaste der Gruppe eine Kurzbeschreibung der jeweiligen Funktionsbelegung ausgegeben wird und
bei dem in einer zweiten Anzeigestufe zu einer einzigen ausgewählten Bedientaste der Gruppe eine erweiterte Beschreibung ausgegeben wird,
**dadurch gekennzeichnet,**
**dass** in der ersten Anzeigestufe die Kurzbeschreibungen aller Bedientasten der Gruppe nebeneinander in im Wesentlichen aneinander angrenzenden Bildschirmbereichen in einem Randbereich einer Anzeigeeinheit des Kraftfahrzeugs ausgegeben werden und dass in der zweiten Anzeigestufe die erweiterte Beschreibung in demselben Randbereich derselben Anzeigeeinheit derart ausgegeben wird,
- **dass** die erweiterte Beschreibung den gesamten Bildschirmbereich der Kurzbeschreibung der ausgewählten Bedientaste einnimmt und
- **dass** die erweiterte Beschreibung zumindest teilweise den Bildschirmbereich der Kurzbeschreibung zumindest einer weiteren Bedientaste einnimmt.

2. Verfahren nach Anspruch 1, **dadurch gekennzeichnet,**
**dass** in der zweiten Anzeigestufe die erweiterte Beschreibung ausschließlich Anzeigefläche einnimmt, die in der ersten Anzeigestufe für Kurzbeschreibungen genutzt wurde.

3. Verfahren nach Anspruch 1 oder 2, **dadurch gekennzeichnet,**
**dass** in der zweiten Anzeigestufe die erweiterte Beschreibung die gesamte Anzeigefläche einnimmt, die in der ersten Anzeigestufe für Kurzbeschreibungen genutzt wurde.

4. Verfahren nach Anspruch 1, **dadurch gekennzeichnet,**
**dass** in der zweiten Anzeigestufe die erweiterte Beschreibung exakt die Anzeigefläche einnimmt, die in der ersten Anzeigestufe für die Gesamtheit der Kurzbeschreibungen genutzt wurde.

5. Verfahren nach einem der Ansprüche 1 bis 4, **dadurch gekennzeichnet,**
**dass** die Bildschirmbereiche der Kurzbeschreibungen in der ersten Anzeigestufe im Wesentlichen dieselbe Höhe besitzen und derart nebeneinander angeordnet sind, dass sie im Wesentlichen eine horizontale Zeile bilden, und dass in der zweiten Anzeigestufe die erweiterte Beschreibung einen gegenüber der Kurzbeschreibung der ausgewählten Bedientaste gesteigerten Teil dieser Zeile einnimmt.

6. Verfahren nach Anspruch 5, **dadurch gekennzeichnet,**
**dass** in der zweiten Anzeigestufe die erweiterte Beschreibung die gesamte Zeile einnimmt.

7. Verfahren nach einem der Ansprüche 1 bis 4, **dadurch gekennzeichnet,**
**dass** die Bildschirmbereiche der Kurzbeschreibungen in der ersten Anzeigestufe im Wesentlichen dieselbe Breite besitzen und derart übereinander angeordnet sind, dass sie im Wesentlichen eine vertikale Spalte bilden, und dass in der zweiten Anzeigestufe die erweiterte Beschreibung einen gegenüber der Kurzbeschreibung der ausgewählten Bedientaste gesteigerten Teil dieser Spalte einnimmt.

8. Verfahren nach einem der Ansprüche 1 oder 2, **dadurch gekennzeichnet,**
**dass** in der zweiten Anzeigestufe die Kurzbeschreibung zumindest einer nicht ausgewählten Bedientaste gegenüber der ersten Anzeigestufe verkleinert wird zu Gunsten der erweiterten Beschreibung der ausgewählten Bedientaste.

9. Verfahren nach Anspruch 8, **dadurch gekennzeichnet,**
**dass** in der zweiten Anzeigestufe die Kurzbeschreibung zumindest einer nicht ausgewählten Bedientaste gegenüber der ersten Anzeigestufe innerhalb der bereits in der ersten Anzeigestufe für Kurzbeschreibungen genutzten Anzeigefläche verschoben wird.

10. Verfahren nach einem der Ansprüche 1 bis 7, **dadurch gekennzeichnet,**
**dass** in der zweiten Anzeigestufe die Kurzbeschreibung zumindest einer nicht ausgewählten Bedientaste zumindest teilweise verdeckt wird von der erweiterten Beschreibung der ausgewählten Bedientaste.

## Claims

1. A method for displaying information relating to assignments of functions to a group of freely assignable operating keys in a motor vehicle, in which, in a first display step, a short description of the respective function assignment is output for each operating key of the group and in which, in a second display step, an extended description is output for a single selected operating key of the group, **characterised in that**, in the first display step, the short descriptions of all the operating keys of the group are output next to one another in substantially mutually adjacent screen regions in an edge region of a display unit of the motor vehicle and **in that**, in the second display step, the extended description is output in the same edge region of the same display unit in such a way
- that the extended description takes up the entire screen region of the short description of the selected operating key and
- that the extended description at least partially takes up the screen region of the short description of at least one further operating key.

2. A method according to claim 1, **characterised in that**, in the second display step, the extended description takes up exclusively the display area, which was used in the first display step for short descriptions.

3. A method according to claim 1 or 2, **characterised in that**, in the second display step, the extended description takes up the entire display area, which was used in the first display step for short descriptions.

4. A method according to claim 1, **characterised in that**, in the second display step, the extended description takes up precisely the display area, which was used in the first display step for the entirety of the short descriptions.

5. A method according to any one of claims 1 to 4, **characterised in that** the screen regions of the short descriptions in the first display step substantially have the same height and are arranged next to one another in such a way that they substantially form a horizontal line, and **in that**, in the second display step, the extended description takes up an increased part of this line compared to the short description of the selected operating key.

6. A method according to claim 5, **characterised in that**, in the second display step, the extended description takes up the entire line.

7. A method according to any one of claims 1 to 4, **characterised in that** the screen regions of the short descriptions in the first display step substantially have the same width and are arranged one above the other in such a way that they substantially form a vertical column, and **in that**, in the second display step, the extended description takes up an increased part of this column compared to the short description of the selected operating key.

8. A method according to either of claims 1 or 2, **characterised in that**, in the second display step, the short description of at least one non-selected operating key is reduced compared to the first display step in favour of the extended description of the selected operating key.

9. A method according to claim 8, **characterised in that**, in the second display step, the short description of at least one non-selected operating key is displaced relative to the first display step within the display area already used in the first display step for short descriptions.

10. A method according to any one of claims 1 to 7, **characterised in that**, in the second display step, the short description of at least one non-selected operating key is at least partly concealed by the extended description of the selected operating key.

## Revendications

1. Procédé pour afficher les informations concernant les occupations de fonction d'un groupe de touches de service que l'on peut occuper librement dans un véhicule automobile selon lequel :
dans une première étape d'affichage, pour chaque touche de service du groupe, on émet une description brève de l'occupation de fonction respective, et
dans un second niveau d'affichage, on émet une description étendue d'une unique touche de service sélectionnée dans le groupe,
procédé **caractérisé en ce que**
dans le premier niveau d'affichage, il y a émission des descriptions brèves de toutes les touches de service du groupe, les unes à côté des autres dans des zones de l'écran essentiellement adjacentes dans une zone du bord d'une unité d'affichage du véhicule, et
dans le second niveau d'affichage, on émet la description étendue dans la même zone de bord de la même unité d'affichage,
- la description étendue occupe toute la zone de l'écran de la description brève de la touche de service sélectionnée, et
- la description étendue occupe au moins partiellement la zone de l'écran de la description brève ou d'au moins une autre touche de service.

2. Procédé selon la revendication 1,
**caractérisé en ce que**
dans le second niveau d'affichage, la description étendue occupe exclusivement la surface d'affichage utilisée dans le premier niveau d'affichage pour les descriptions brèves.

3. Procédé selon la revendication 1 ou 2,
**caractérisé en ce que**
dans le second niveau d'affichage, la description étendue occupe toute la surface d'affichage utilisée pour les descriptions brèves dans le premier niveau d'affichage.

4. Procédé selon la revendication 1,
**caractérisé en ce que**
le second niveau d'affichage, la description étendue occupe exactement la surface d'affichage utilisée dans le premier niveau d'affichage pour toutes les descriptions brèves.

5. Procédé selon l'une des revendications 1 à 4,
**caractérisé en ce que**
les zones de l'écran image pour les descriptions brèves dans le premier niveau d'affichage occupent principalement la même hauteur et ces zones sont juxtaposées de façon à former principalement une ligne horizontale et dans le second niveau d'affichage, la description étendue occupe une partie augmentée de cette ligne par rapport à la description brève des touches de service sélectionnées.

6. Procédé selon la revendication 5,
**caractérisé en ce que**
dans le second niveau d'affichage, la description étendue occupe toute la ligne.

7. Procédé selon l'une des revendications 1 à 4,
**caractérisé en ce que**
les zones de l'écran pour les descriptions brèves dans le premier niveau d'affichage ont principalement la même largeur et sont superposées de façon à constituer une colonne essentiellement verticale et
dans le second niveau d'affichage, la description étendue occupe une partie croissance de cette colonne par rapport à la description brève des touches de service sélectionnées.

8. Procédé selon l'une des revendications 1 ou 2,
**caractérisé en ce que**
dans le second niveau d'affichage, la description brève d'au moins une touche de service non sélectionnée est réduite par rapport à celle du premier niveau d'affichage au profit de la description étendue de la touche de service sélectionnée.

9. Procédé selon la revendication 8,
**caractérisé en ce que**
dans le second niveau d'affichage, la description brève d'au moins une touche de service non sélectionnée est décalée par rapport au premier niveau d'affichage dans la surface d'affichage déjà utilisée pour les descriptions brèves dans le premier niveau d'affichage.

10. Procédé selon les revendications 1 à 7,
**caractérisé en ce que**
dans le second niveau d'affichage, la description brève d'au moins une touche de service non sélectionnée est au moins partiellement couverte par la description étendue de la touche de service sélectionnée.
